# EUROPEAN PATENT APPLICATION

(11) **EP 0 654 408 A1**
(43) Date of publication of application: **24.05.1995**
(21) Application number: 94117586.1
(22) Date of filing: 08.11.1994
(51) Int. Cl.: B65B 57/14, B65G 47/71

(54) **Apparatus for feeding products from a single machine to two machines**

(30) Priority: 19.11.1993 IT BO930464
(71) Applicant: CASSOLI MACCHINE AUTOMATICHE CONFEZIONATRICI S.R.L., I-40033 Casalecchio di Reno (Bologna) (IT)
(72) Inventor: Cassoli, Paolo, I-40033 Casalecchio di Reno (Bologna) (IT); Cassoli, Stefano, I-40033 Casalecchio di Reno (Bologna) (IT)
(74) Representative: Porsia, Dino, Dr.

(57) **Abstract**

The positive conveyors (14 to 26 and 114 to 126) that feed the products to the two packing machines (28,128), are driven in phase with these machines, which are powered by respective brushless motors (36,136), and are positioned with their initial portion to the side of the end part of the positive conveyor (5) that carries the products (2) from the exit of the manufacturing machine (1) and that is driven in phase by this machine, which is also powered by a brushless motor (35). A translation means (29) driven in a reciprocating manner by a brushless motor (34) operates at the point where the three said positive conveyors meet. All the aforesaid motors are controlled by an electronic microprocessor unit (37) which causes the packing machines to operate out of phase in such a way that the products coming from the manufacturing machine can be conveyed to the two packing machines in alternation. In the event of stoppage of one packing machine, said unit causes said translator (29) to transfer all the products to the active packing machine, which will preferably increase speed, while the manufacturing machine will slow down and adapt itself to the new situation.

## Description

The invention relates to an apparatus for feeding products coming from a single manufacturing machine to two processing machines in alternation and flexibly. In particular the apparatus concerned has been designed to connect a high-output machine for folding and stacking paper towels or napkins to two packing machines, so that the resulting installation has a satisfactory operating capacity, even in the event of stoppage of one of the two packing machines.

The features of the apparatus in question, and the advantages procured thereby, will be clear in the following description of a preferred embodiment, illustrated purely by way of a non-restricting example in the figures of the single accompanying sheet of drawings, in which:
- Fig. 1 is a schematic plan view of the apparatus from above; and
- Fig. 2 shows details of the apparatus of Fig. 1, viewed along the line of section II-II.

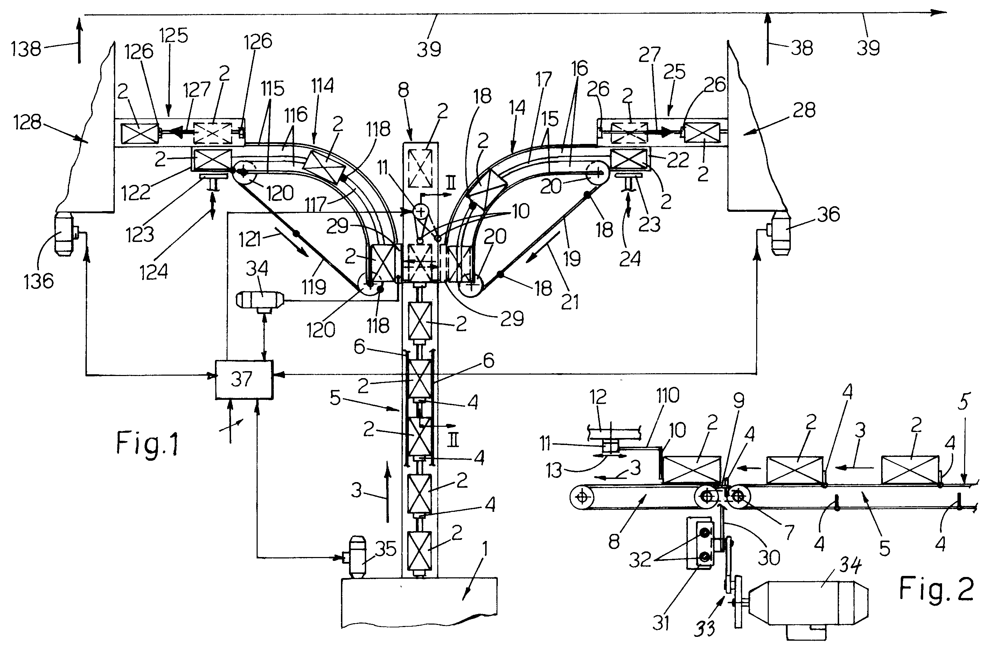

In Fig. 1, 1 indicates the manufacturing machine that forms products 2, for example stacks of paper towels or napkins, which are conveyed in single file in the direction indicated by the arrow 2 by the push members 4 of an endless conveyor 5, of known kind, which takes its motion from the same machine 1. As the conveyor 5 carries them along, the products 2 are controlled laterally by appropriate guide means 6, which can be adjusted to the dimensions of the products. In the present example, the conveyor 5 is of the kind in which the push members 4 remain vertical when they reach the end part of the conveyor and pass from its top half to its bottom half around the spindle 7 (Fig. 2), so as not to harm the product 2. From the conveyor 5, the product 2 is positioned in the initial part of a belt conveyor 8 which takes its motion from the spindle 7 so that its top half is rotating in the same direction as the arrow 3 and at the same speed as said conveyor 5. Between conveyor 5 and conveyor 8 is a bridge 9 to enable the product to pass from one conveyor to the other without jamming. As it reaches the conveyor 8, the product stops against a vertical retainer 10 integral with an arm 110 fixed to the rotating mechanism of vertical axis of an actuator 11 mounted on the support 12 and adjustable in the directions indicated by the arrow 13, so that the position of the retainer 10 can be adjusted to the dimensions of the products 2. To the side of the initial part of the conveyor 8, on which a product cyclically stops, on either side of this conveyor are identical curved channels 14,114 which diverge symmetrically and, from being initially parallel with the conveyor 8, terminate at right angles thereto. The channels 14,114 are formed laterally by guides 15,115, which it is possible to adjust to suit the width of the product 2, and, underneath, comprise surfaces 16,116 having respective longitudinal central slots 17,117, through which there project, and along which there travel, the vertical pushers 18,118 fixed at precisely equal intervals to toothed belts 19,119 travelling around toothed pulleys 20,120 on vertical axes positioned at the ends of the channels 14,114, and which as they pass along these channels run on curved guides (not shown) to allow the pushers 18,118 to run along the slots 17,117. It will be understood that the toothed pulleys and belts can be replaced with other positive-type flexible drives. The toothed belts 19,119 travel in the direction indicated by the arrows 21,121. At the end part of the channels 14,114 are standby stations 22,122 for the products as they leave said channels (see below), and to the side of these stations are, on one side, respective pushers 23,123 driven in a reciprocating manner shown by the arrows 24,124, in phase with the movement of the belts 19,119. On the other side of said standby stations 22,122 are positive conveyors 25,125, with push members 26,126 that travel in the direction indicated by the arrows 27,127, in phase with the pushers 23,123 and toothed belts 19,119 and that feed the products to the respective packing machines 28,128. Parts 19,23 and 25 take their motion from the machine 28, while parts 119,123 and 125 take theirs from the machine 128.

To the side of the initial part of the conveyor 8, where the conveyor 5 cyclically feeds a product 2, there operates a translation plate or translator 29, supported for example by a vertical rod 30 (Fig. 2) which passes through a slot in the bridge 9 and has an end underneath the conveyors 5,8 which is fixed to a carriage 31 able to move on fixed guides 32 parallel with the end spindles of said conveyors. The carriage 31 is connected to a connecting rod and crank mechanism 33 driven by an electric motor 34 whose speed and phase are controlled, such as the kind known commercially by the trademark Brushless or equivalent. It is by motors of this kind, indicated by 35 and 36, 136, that the manufacturing machine 1 and the two packing machines 28,128 are driven. The motors 34,35,36, Fig. 1, are connected by respective electronic control boards, to a programmable microprocessor unit 37 which also controls the operation of the rotating actuator 11, with the following logic. The packing machines 28, 128 are operated out of phase in such a way that the products positioned cyclically in front of the retainer 10 by the conveyor 5 are transferred by the translator 29 into the channels 14,114 in alternation. The translator 29 moves in one direction, awaits the arrival of the next product, then moves in the other direction, and so on. The products transferred into the channels 14,114 are taken up in phase by the push members 18,118, transferred to the standby stations 22,122 and introduced by the pushers 23,123 into the conveyors 25,125 which feed the packing machines 28,128. The manufacturing machine 1 is normally operated at higher levels of production, while the packing machines downstream operate at medium values such that the two different machines in combination handle all the products coming from the manufacturing machine. If one of the two packing machines stops, the unit 37 detects this condition, increases the operating speed of the still active packing machine and sends a command to the manufacturing machine 1 for a proportional decrease in speed, so as to adapt it to the new requirements. In such an event, all the products coming from the conveyor 5 are translated towards the still active downstream machine by the translator 29 which, after the useful stroke of transferring the product, returns rapidly to the starting position before the next product arrives in front of it.

If necessary, the present apparatus will also lend itself to operating the packing machines simultaneously at different speeds.

At any moment, should an emergency arise in which the products cannot be transferred into the channels 14,114, for example in the event of stoppage of both packing machines, the unit 37 sends a command to the rotating actuator 11 which moves the retainer 10 to the side of the conveyor 8, as indicated in Figure 1 in dashed lines, so that the products are unloaded from the conveyor 8 into a collecting space (not shown). Later, if necessary, the manufacturing machine will be brought to a halt down an appropriate deceleration gradient. It will be understood that in contrast to the foregoing, the conveyor 8 may normally be stationary and may be activated only when the retainer 10 is made inactive.

The apparatus according to the invention makes it possible to arrange the packing machines 28,128 side by side and parallel, so that the products leaving the two machines, see arrows 38,138, can be conveyed from a single conveying line indicated schematically by the arrow 39, to a single packaging machine.

It will be understood that the description has referred to a preferred embodiment of the invention, to which numerous variants and modifications may be made, especially from the constructional point of view, without however departing from the underlying principle of the invention as set forth above, as illustrated and as claimed below. In the claims which follow, references in brackets are purely indicative and do not restrict the scope of protection of said claims.

## Claims

1. Apparatus for feeding products (2) coming from a single manufacturing machine (1) to two processing machines (28, 128) in alternation,
characterized by the fact of comprising:
- a first positive conveyor (5) carrying the products (2) from the manufacturing machine (1) to a second conveyor (8) at which there is arranged a retainer (10) for stopping the products;
- a pair of diverging positive conveyors (14, 114) arranged each at a side of the second conveyor (8), said diverging conveyors leading each to a processing machine (28,128);
- a translator device (29) driven in a reciprocating manner so as to move alternately sidewise the products from the second conveyor (8) to each one of the said diverging conveyors (14, 114).

2. Apparatus according to claim 1, characterized in that the said first positive conveyor (5) is driven by a speed-and phase-controlled electric motor (35), the translator device (29) is driven by a speed- and phase-controlled electric motor (34), the diverging positive conveyors (14,114) are driven by respective speed- and phase-controlled electric motors (36, 136) and all the aforesaid motors (34, 35, 36, 136) are controlled by a programmable processor unit (37) which causes the packing machines (28, 128) to operate out of phase in such a way that the products coming from the manufacturing machine can be discharged in alternation to the conveyors that feed the said packing machines, in such a manner that the manufacturing machine (1) can present a greater operating capacity than each of the packing machines (28, 128), while in the event of stoppage of one packing machine, said processor unit causes the translator device to tranfer all the products to the operating packing machine the speed of which will be increased, while the speed of the manufacturing machine will be slowed down.

3. Apparatus according to claim 2, in which the processor unit (37) can operate in such a way that the products coming from the manufacturing machine (1) are sorted at different frequencies to the diverging conveyors that feed the packing machines (28, 128) so that the said packing machines can operate at different speeds.

4. Apparatus according to claim 2 in which the retainer (10) is mounted on an actuator (11) controlled by the processor unit (37) whereby, in case of emergency such as the unintended stoppage of both packing machines (28, 128), the said retainer is moved out of the way so that the products can be freely evacuated from the second conveyor (8) to any suitable discharge or collecting centre.
